# FASCICULE DE BREVET EUROPEEN

(11) **EP 3 006 761 B1**
(45) Date de publication et mention de la délivrance du brevet: **12.09.2018**
(21) Numéro de dépôt: 15185949.3
(22) Date de dépôt: 18.09.2015
(51) Int. Cl.: F16D 25/0638, F16D 25/12, F16D 21/06

(54) **SYSTÈME DE TRANSMISSION COMPORTANT UN MÉCANISME À DOUBLE EMBRAYAGE HUMIDE**
ÜBERTRAGUNGSSYSTEM, DAS EINEN MECHANISMUS MIT EINER NASSEN DOPPELKUPPLUNG UMFASST
TRANSMISSION SYSTEM COMPRISING A DUAL WET CLUTCH MECHANISM

(30) Priorité: 09.10.2014 FR 1459678
(43) Date de publication de la demande: 13.04.2016
(73) Titulaire: Valeo Embrayages, 80009 Amiens Cedex 2 (FR)
(72) Inventeur: ARHAB, Rabah, 95350 ST BRICE SOUS FORET (FR); RIBOT, Herve, 80200 PERONNE (FR); CAUMARTIN, Laurent, 80600 BEAUQUESNE (FR)
(74) Mandataire: Cardon, Nicolas

(56) Documents cités:
- EP-A1- 1 686 277
- EP-A1- 2 182 235
- EP-A2- 1 174 631
- EP-A2- 2 685 122
- DE-A1-102010 018 989
- DE-T5-112011 105 477
- FR-A1- 2 557 941
- US-A1- 2012 085 615
- US-A1- 2013 153 355

## Description

La présente invention concerne un système de transmission comportant un mécanisme à double embrayage humide.

La présente invention concerne plus particulièrement un système de transmission, notamment pour un véhicule automobile, comportant autour d'un axe au moins une coquille d'entrée qui est liée en rotation à un arbre menant et à un voile d'entraînement pour lier en rotation ladite coquille d'entrée à un mécanisme à double embrayage humide qui, comportant au moins un premier embrayage et un deuxième embrayage respectivement de type multidisques, est commandé pour accoupler sélectivement ledit arbre menant à un premier arbre mené et à un deuxième arbre mené.

On connaît de l'art antérieur de tels systèmes de transmission comportant un mécanisme à double embrayage.

On y distingue notamment deux conceptions de mécanisme à double embrayage, d'une part les mécanismes à double embrayage dits « à sec » et, d'autre part, les mécanismes à double embrayage dits « humide ».

La présente invention concerne plus particulièrement un double embrayage humide (ou « *Double Wet Clutch* » en anglais).

Dans le cas d'un mécanisme à double embrayage humide, les embrayages sont généralement de type multidisques et les garnitures de friction des disques sont maintenues en permanence humides par de l'huile.

Un mécanisme à double embrayage comporte un premier embrayage qui, agencé par exemple côté boîte de vitesses, sert à la fois au démarrage et à l'engagement des rapports impairs et un deuxième embrayage qui, agencé par exemple côté moteur, prend en charge les rapports pairs et la marche arrière.

Le premier embrayage et le deuxième embrayage transmettent alternativement la puissance d'entrée (le couple et la vitesse) de l'arbre menant, qui est lié en rotation au moteur, à l'un des deux arbres menés qui sont liés à la boîte de vitesses et généralement coaxiaux.

Pour une sécurité améliorée, le premier embrayage et le deuxième embrayage du mécanisme sont respectivement débrayés au repos, c'est à dire « normalement ouvert », et sont fermés activement par des moyens d'actionnement hydraulique d'un dispositif de commande qui est associé au mécanisme à double embrayage.

L'intérêt croissant porté aux mécanismes à double embrayage est notamment lié au confort et aux performances obtenues, ainsi qu'à la continuité de l'accélération lors des changements de rapport, sans rupture de couple.

Les systèmes de transmission comportant un tel mécanisme à double embrayage apportent aussi, par comparaison notamment avec une boîte de vitesse automatique traditionnelle, un gain de consommation et des émissions de CO₂.

Un tel système de transmission est décrit par exemple dans le document US 2012/085615 A1.

Le document US 2012/085615 A1 de l'état de la technique, décrit un système de transmission, notamment pour un véhicule automobile, comportant autour d'un axe de rotation une coquille d'entrée qui est liée en rotation à un arbre menant et à un voile d'entraînement pour lier en rotation ladite coquille d'entrée à un mécanisme à double embrayage humide. Le système de transmission comportant un premier embrayage (E1) et un deuxième embrayage (E2) respectivement de type multidisques, est commandé pour accoupler sélectivement ledit arbre menant à un premier arbre (A1) mené et à un deuxième arbre (A2) mené.

Les systèmes de transmission comportant un mécanisme à double embrayage humide connus ne donnent cependant pas entière satisfaction, notamment pour certaines applications.

Dans certaines applications, notamment mais non exclusivement pour des véhicules industriels de type « truck » (camions, utilitaires, etc.), la transmission de manière fiable de couples importants est recherchée tout en ayant une compacité radiale du système de transmission, afin par exemple d'en permettre l'implantation entre le moteur et la boite de vitesses du véhicule.

Le couple moteur à transmettre par les systèmes de transmission est en constante augmentation depuis plusieurs années, jusqu'à atteindre des valeurs de l'ordre de 4000 Nm. Les architectures connues de systèmes de transmission comportant un mécanisme à double embrayage humide ne permettent pas de transmettre ces valeurs de couple et/ou n'offrent pas une fiabilité satisfaisante.

Le but de la présente invention est notamment de proposer un système de transmission comportant un mécanisme à double embrayage humide permettant de résoudre au moins une partie de certains inconvénients de l'art antérieur.

Dans ce but, l'invention propose un système de transmission, notamment pour un véhicule automobile, comportant autour d'un axe au moins une coquille d'entrée qui est liée en rotation à un arbre menant et à un voile d'entraînement pour lier en rotation ladite coquille d'entrée à un mécanisme à double embrayage humide qui, comportant au moins un premier embrayage et un deuxième embrayage respectivement de type multidisques, est commandé pour accoupler sélectivement ledit arbre menant à un premier arbre mené et à un deuxième arbre mené,
caractérisé en ce que la coquille d'entrée et le voile d'entraînement sont liés en rotation sans jeu angulaire par des moyens de liaison.

Grâce aux moyens de liaison en rotation sans jeu angulaire selon l'invention, la transmission d'un couple élevé entre la coquille d'entrée et le voile d'entraînement est obtenue et avec une fiabilité satisfaisante. L'absence de jeu angulaire améliore la rigidité torsionnelle de la liaison de la coquille d'entrée avec le voile d'entrainement. L'absence de jeu angulaire supprime également le risque d'ébranlement de la liaison. Ce risque est particulièrement présent lorsque la liaison est réalisée par imbrication de dentures aménagées entre la coquille d'entrée et le voile d'entraînement.

De préférence, la coquille d'entrée et le voile d'entraînement sont liés en rotation sans jeu axial par les moyens de liaison. L'absence de jeu axial supprime le risque d'ébranlement de la liaison.

Selon l'invention, lesdits moyens de liaison en rotation sans jeu angulaire de la coquille d'entrée et du voile d'entraînement sont réalisés par rivetage, par soudage ou par sertissage.

Selon l'invention, le système comporte des moyens d'évacuation d'huile agencés dans au moins une partie radialement externe de la coquille d'entrée et/ou dans au moins une partie radialement externe du voile d'entraînement pour permettre une évacuation de l'huile, radialement vers l'extérieur.

Selon l'invention, lesdits moyens d'évacuation d'huile comportent au moins un passage radial d'évacuation d'huile ménagé circonférentiellement entre les parties de liaison de la coquille d'entrée et du voile d'entraînement liées en rotation par lesdits moyens de liaison.

Selon d'autres caractéristiques de l'invention :
- lesdits moyens de liaison en rotation sans jeu angulaire de la coquille d'entrée et du voile d'entraînement sont réalisés par rivetage ;
- lesdits moyens de liaison, réalisés par rivetage, comportent des rivets rapportés ;
- les rivets sont répartis circonférentiellement de manière régulière autour de l'axe de rotation du système de transmission ;
- lesdits moyens de liaison en rotation sans jeu angulaire de la coquille d'entrée et du voile d'entraînement sont réalisés par sertissage, notamment un sertissage à chaud ;
- lesdits moyens de liaison en rotation sans jeu angulaire de la coquille d'entrée et du voile d'entraînement sont réalisés par soudage ;
- lesdits moyens de liaison sont réalisés par un cordon de soudure circonférentiellement continu ;
- lesdits moyens de liaison sont réalisés par un cordon de soudure circonférentiellement discontinu, telle qu'une soudure par apport de matière;
- lesdits moyens de liaison sont réalisés par une soudure sans apport de matière, telle qu'une soudure par résistance par points ;
- la coquille d'entrée comporte au moins une partie de liaison d'orientation radiale qui est liée en rotation par lesdits moyens de liaison avec une partie de liaison d'orientation radiale du voile d'entraînement ;
- au moins l'une desdites parties de liaison d'orientation radiale est constituée par un rebord circonférentiellement continu ;
- la coquille d'entrée comporte, à l'extrémité libre avant d'une partie radialement externe d'orientation axiale, un rebord formant ladite partie de liaison circonférentiellement continue et d'orientation radiale de la coquille d'entrée et/ou le voile d'entraînement comporte, à l'extrémité libre arrière d'une partie radialement externe d'orientation axiale, un rebord formant ladite partie de liaison circonférentiellement continue et d'orientation radiale du voile d'entraînement ;
- au moins l'une desdites parties de liaison d'orientation radiale, circonférentiellement discontinue, est constituée par des pattes radiales ;
- la coquille d'entrée comporte, à l'extrémité libre avant d'une partie radialement externe d'orientation axiale, des pattes radiales formant ladite partie de liaison circonférentiellement continue de la coquille d'entrée et/ou le voile d'entraînement comporte, à l'extrémité libre arrière d'une partie radialement externe d'orientation axiale, des pattes radiales formant ladite partie de liaison circonférentiellement continue du voile d'entraînement ;
- ladite au moins une partie de liaison de la coquille d'entrée comporte une face radiale et ladite au moins une partie de liaison du voile d'entraînement comporte une face radiale, lesdites faces radiales étant accolées axialement l'une avec l'autre dans au moins des portions où lesdites parties de liaison sont liées axialement par lesdits moyens de liaison ;
- lesdits moyens d'évacuation d'huile sont répartis circonférentiellement de manière régulière et/ou sont appariés symétriquement par rapport à l'axe ;
- lesdits moyens d'évacuation d'huile comportent au moins des trous radiaux réalisés dans une partie radialement externe d'orientation axiale du voile d'entraînement et/ou dans une partie radialement externe d'orientation axiale de la coquille d'entrée ;
- ledit au moins un passage radial d'évacuation d'huile est formé par un embouti axial réalisé dans au moins une portion non liée de ladite au moins une partie de liaison de la coquille d'entrée et/ou dans au moins une portion non liée de ladite au moins une partie de liaison du voile d'entraînement ;
- ledit au moins un passage radial d'évacuation d'huile est formé par un jeu axial entre un bord de la coquille d'entrée et le voile d'entraînement, ledit jeu axial circonférentiellement discontinu étant situé entre tout ou partie des portions desdites parties de liaison de la coquille d'entrée et du voile d'entraînement liées en rotation par lesdits moyens de liaison ;
- la coquille d'entrée comporte une partie radialement externe d'orientation axiale qui est inclinée par rapport à l'orientation axiale pour guider l'huile en direction des moyens d'évacuation et/ou le voile d'entraînement comporte une partie radialement externe d'orientation axiale qui est inclinée par rapport à l'orientation axiale pour guider l'huile en direction des moyens d'évacuation.

D'autres caractéristiques et avantages de l'invention apparaîtront au cours de la lecture de la description détaillée qui va suivre pour la compréhension de laquelle on se reportera aux dessins annexés parmi lesquels :

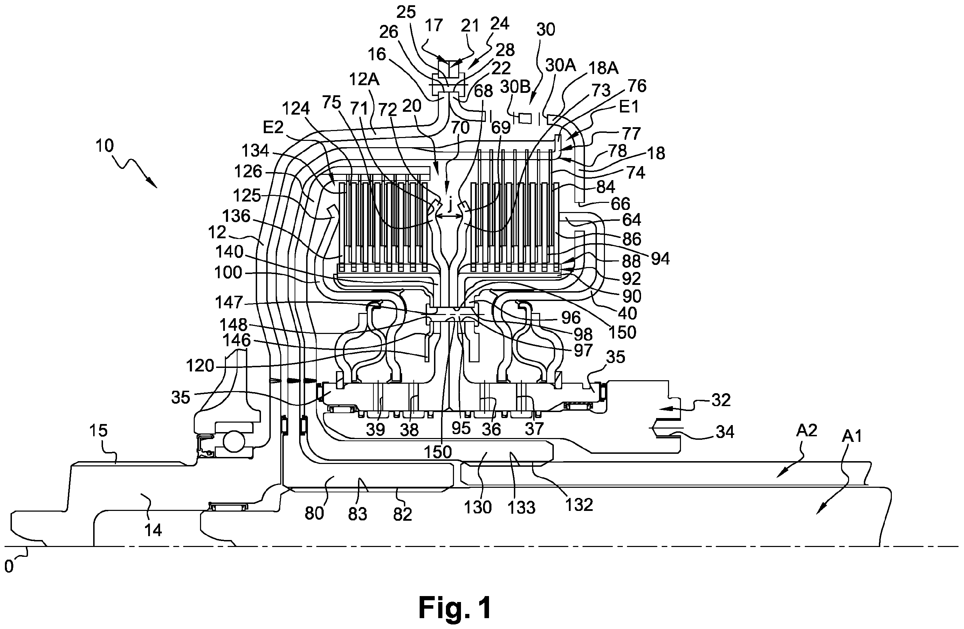

- la figure 1 est une demi-vue en coupe axiale qui représente un système de transmission comportant un mécanisme à double embrayage humide et qui illustre un premier mode de réalisation de l'invention dans lequel les moyens de liaison de la coquille d'entrée et du voile d'entraînement sont réalisés par rivetage, les rivets liant axialement sans jeu et en rotation sans jeu angulaire un rebord radial de la coquille d'entrée et un rebord radial du voile d'entraînement ;

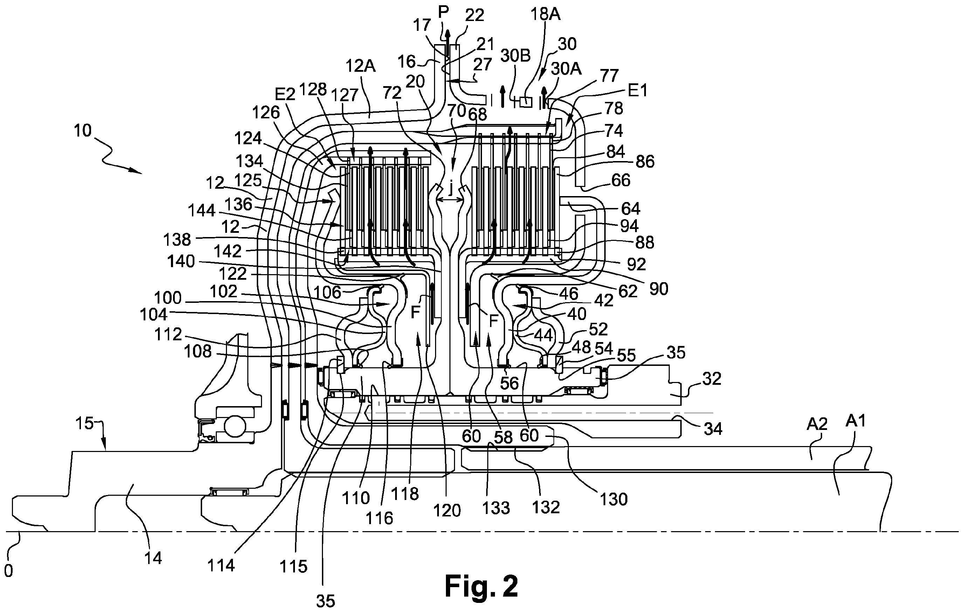

- la figure 2 est une demi-vue en coupe axiale qui, décalée angulairement par rapport à celle de la figure 1, représente le système de transmission selon le premier mode de réalisation et qui illustre notamment l'un des passages radiaux de circulation d'huile existant entre deux rivets consécutifs et formé par un embouti axial de la face radiale du rebord de la coquille d'entrée ;

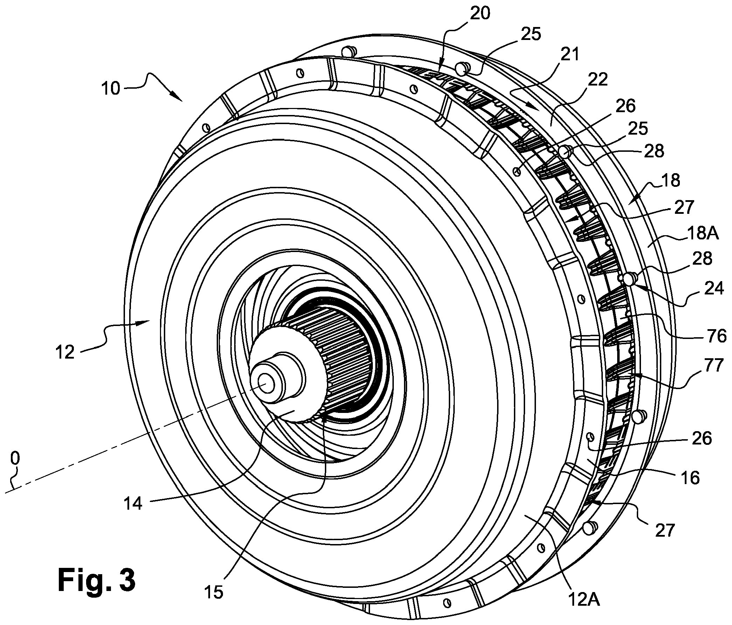

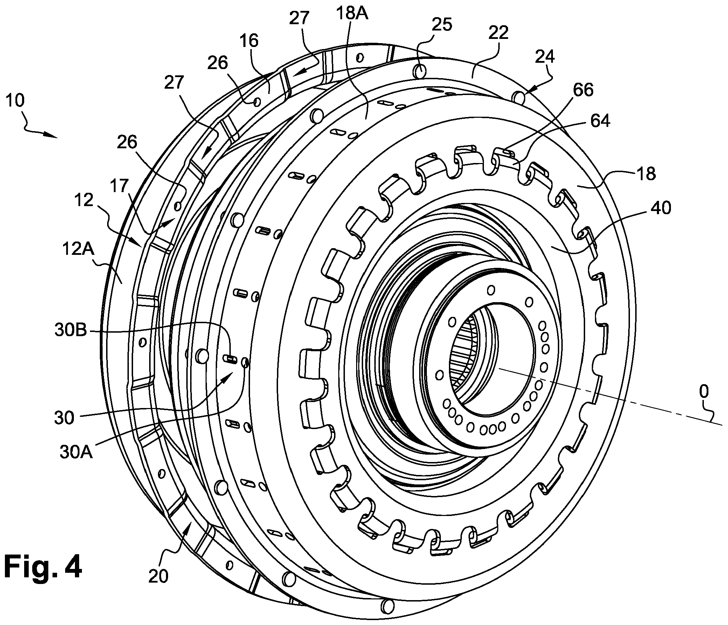

- les figures 3 et 4 sont des vues en perspective qui représentent le système de transmission selon le premier mode de réalisation et qui illustrent respectivement, au moyen d'un éclaté axial, les rebords circonférentiellement continus de la coquille d'entrée et du voile d'entraînement qui sont liés en rotation sans jeu angulaire par rivetage et les moyens d'évacuation d'huile comportant d'une part lesdits passages radiaux de circulation d'huile obtenus par emboutissage du rebord radial de la coquille d'entrée et, d'autre part, des trous radiaux réalisés dans la partie radialement externe d'orientation axiale du voile d'entraînement ;

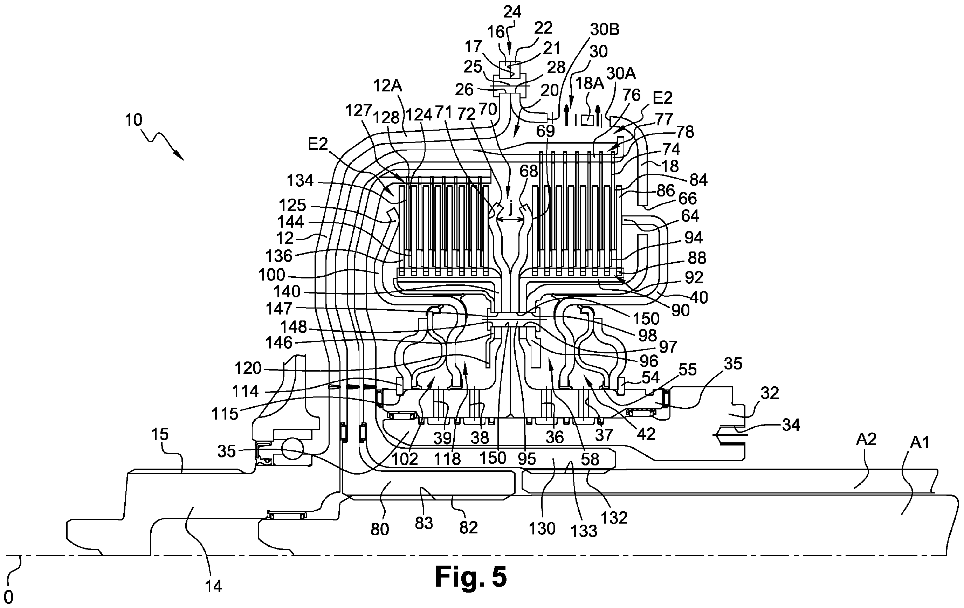

- la figure 5 est une demi-vue en coupe axiale qui représente un système de transmission comportant un mécanisme à double embrayage humide et qui illustre un deuxième mode de réalisation de l'invention dans lequel les moyens de liaison de la coquille d'entrée et du voile d'entraînement sont réalisés par rivetage, les rivets liant axialement sans jeu et en rotation sans jeu angulaire des pattes radiales de la coquille d'entrée et un rebord radial circonférentiellement du voile d'entraînement ;

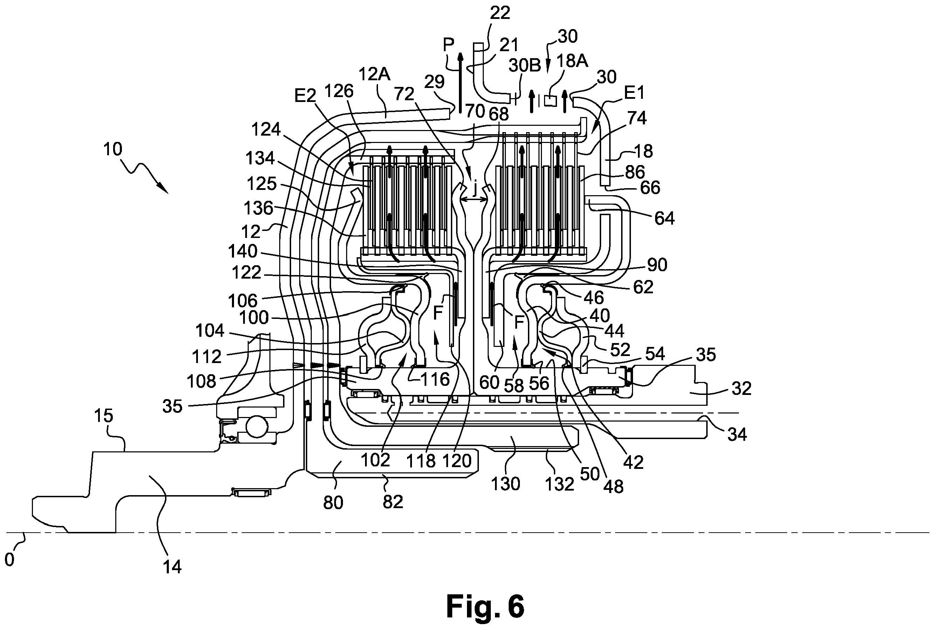

- la figure 6 est une demi-vue en coupe axiale qui, décalée angulairement par rapport à celle de la figure 5, représente le système de transmission selon le deuxième mode de réalisation et qui illustre notamment l'un des passages radiaux de circulation d'huile existant entre deux pattes consécutives et formé par un jeu axial entre un bord de la coquille d'entrée et la face radiale du rebord du voile d'entraînement axialement en vis-à-vis ;

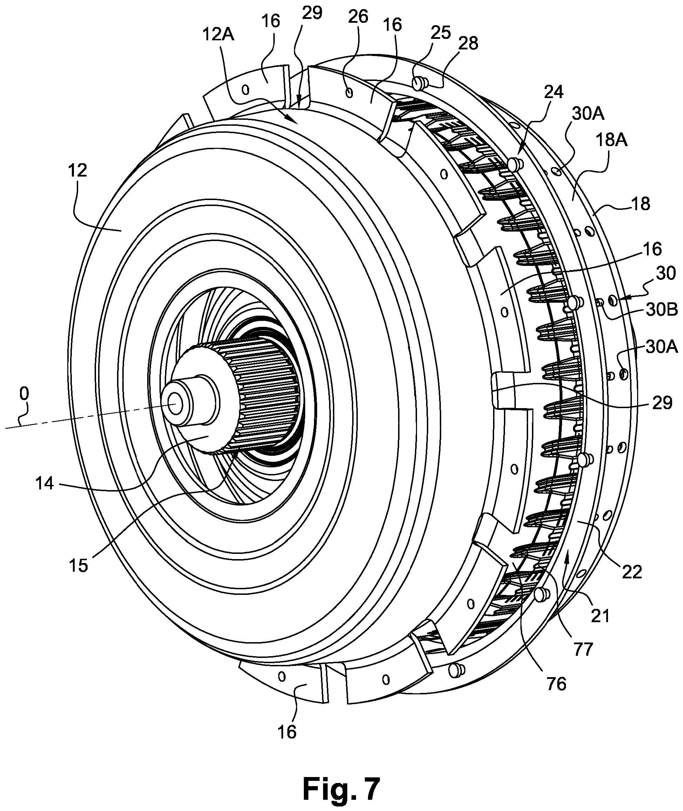

- la figure 7 est une vue en perspective qui représente le système de transmission selon le deuxième mode de réalisation et qui illustre, au moyen d'un éclaté axial, les pattes radiales de la coquille d'entrée et le rebord circonférentiellement continu du voile d'entraînement qui sont liés en rotation sans jeu angulaire par rivetage, et les moyens d'évacuation d'huile comportant d'une part lesdits passages radiaux de circulation d'huile obtenus par ledit jeu axial ménagé par rapport au voile d'entraînement, entre deux pattes circonférentiellement consécutives de la coquille d'entrée et, d'autre part, des trous radiaux réalisés dans la partie radialement externe d'orientation axiale du voile d'entraînement.

Dans la suite de la description et les revendications, on utilisera à titre non limitatif et afin d'en faciliter la compréhension, les termes « avant » ou « arrière » selon la direction déterminée par rapport à une orientation axiale définie par l'axe O principal de rotation du système de transmission et les termes « intérieur / interne » ou « extérieur / externe » par rapport à l'axe O et suivant une orientation radiale, orthogonale à ladite orientation axiale.

On a représenté sur les figures 1 à 4, un premier mode de réalisation d'un système 10 de transmission, notamment pour un véhicule automobile, présentant un axe O principal de rotation.

Le système 10 de transmission comporte autour de l'axe O au moins un élément d'entrée qui est lié en rotation à un arbre menant (non représenté).

De préférence, l'élément d'entrée du système 10 comporte au moins une coquille 12 d'entrée qui est liée en rotation à un moyeu 14 d'entrée.

La coquille 12 d'entrée, présentant ici globalement une forme en « L », comporte une partie d'orientation radiale et une partie 12A radialement externe d'orientation axiale.

Le moyeu 14 comporte une partie d'orientation radiale et une partie d'orientation axiale, le moyeu 14 étant agencé radialement à l'intérieur par rapport à la coquille 12.

La partie d'orientation axiale du moyeu 14 s'étend à l'intérieur de la partie radiale, axialement vers l'arrière, dans une direction correspondant à celle du moteur.

Le moyeu 14 comporte des cannelures 15, ménagées dans une surface cylindrique externe de la partie axiale, pour la liaison en rotation de l'élément d'entrée formé par au moins la coquille 12 et le moyeu 14 avec l'arbre menant.

L'extrémité intérieure de la partie radiale de la coquille 12 et celle extérieure de la partie radiale du moyeu 14 d'entrée sont solidaires, de préférence fixées ensemble par soudage.

En variante, l'extrémité intérieure de la partie radiale de la coquille 12 d'entrée et l'extrémité extérieure de la partie radiale du moyeu 14 d'entrée sont fixées ensemble par rivetage.

Le moyeu 14 d'entrée est par exemple lié en rotation par l'intermédiaire des cannelures 15 à la sortie d'un dispositif d'amortissement ou amortisseur (tel qu'un double volant amortisseur, etc.) dont l'entrée est liée, par l'intermédiaire notamment d'un volant moteur, à l'arbre menant formé par un vilebrequin qu'entraîne en rotation un moteur équipant le véhicule automobile.

La coquille 12 d'entrée est entraînée en rotation par le moteur par l'intermédiaire du moyeu 14 d'entrée.

La partie 12A radialement externe d'orientation axiale de la coquille 12 d'entrée comporte, à son extrémité axiale avant libre, au moins une partie 16 de liaison d'orientation radiale.

Ladite au moins une partie 16 de liaison de la coquille 12 d'entrée comporte une face 17 radiale orientée axialement vers l'avant.

Dans ce premier mode de réalisation et tel qu'illustré notamment par les figures 3 et 4, ladite au moins une partie 16 de liaison d'orientation radiale de la coquille 12 d'entrée est constituée par un rebord circonférentiellement continu.

En variante, ladite au moins une partie 16 de liaison d'orientation radiale de la coquille 12 d'entrée est circonférentiellement discontinue.

La coquille 12 d'entrée est liée en rotation à un voile 18 d'entraînement, lequel voile 18 d'entraînement lie en rotation ladite coquille 12 d'entrée à un mécanisme 20 à double embrayage humide.

Le voile 18 d'entraînement comporte une partie d'orientation radiale qui est liée au mécanisme 20 et une partie 18A radialement externe d'orientation axiale.

La partie 18A radialement externe d'orientation axiale du voile 18 d'entraînement comporte, à son extrémité axiale arrière libre, au moins une partie 22 de liaison d'orientation radiale.

Ladite au moins une partie 22 de liaison du voile 18 d'entraînement comporte une face 21 radiale orientée axialement vers l'arrière.

Dans ce premier mode de réalisation et tel qu'illustré notamment par les figures 3 et 4, ladite au moins une partie 22 de liaison d'orientation radiale du voile 18 d'entraînement est constituée par un rebord circonférentiellement continu.

En variante, ladite au moins une partie 22 de liaison d'orientation radiale du voile 18 d'entraînement est circonférentiellement discontinue.

La coquille 12 d'entrée comporte, à l'extrémité libre avant de sa partie 12A radialement externe d'orientation axiale, un rebord 16 formant ladite partie de liaison circonférentiellement continue et d'orientation radiale de la coquille 12 d'entrée et le voile 18 d'entraînement comporte, à l'extrémité libre arrière de sa partie 18A radialement externe d'orientation axiale, un rebord 22 formant ladite partie de liaison circonférentiellement continue et d'orientation radiale du voile 18 d'entraînement.

En variante, la coquille 12 d'entrée comporte, à l'extrémité libre avant de sa partie 12A radialement externe d'orientation axiale, un rebord 16 formant ladite partie de liaison circonférentiellement continue et d'orientation radiale de la coquille 12 d'entrée ou le voile 18 d'entraînement comporte, à l'extrémité libre arrière de sa partie 18A radialement externe d'orientation axiale, un rebord 22 formant ladite partie de liaison circonférentiellement continue et d'orientation radiale du voile 18 d'entraînement.

Ainsi, au moins l'une desdites parties 16, 22 de liaison d'orientation radiale est constituée par un rebord circonférentiellement continu.

La coquille 12 d'entrée et le voile 18 d'entraînement sont liés en rotation sans jeu angulaire par des moyens 24 de liaison.

Avantageusement, une liaison en rotation sans jeu angulaire permet de transmettre un couple important, par exemple de 4000 Nm, tout en ayant des moyens de liaison présentant la fiabilité requise.

De préférence, la coquille 12 d'entrée et le voile 18 d'entraînement sont liés en rotation sans jeu axial par lesdits moyens 24 de liaison.

De préférence, lesdits moyens 24 de liaison en rotation sans jeu angulaire de la coquille 12 d'entrée et du voile 18 d'entraînement sont réalisés par rivetage.

En variantes non représentées, d'autres modes de liaison que le rivetage sont susceptibles d'être mis en oeuvre pour lier en rotation, sans jeu angulaire ni axial, la coquille 12 d'entrée et le voile 18 d'entraînement.

En variante, lesdits moyens 24 de liaison en rotation sans jeu angulaire de la coquille 12 d'entrée et du voile 18 d'entraînement sont réalisés par soudage.

Lesdits moyens 24 de liaison sont par exemple constitués par un cordon de soudure, lequel cordon de soudure peut être circonférentiellement continu ou discontinu, notamment en fonction des parties 16 et 22 de liaison de la coquille 12 d'entrée et du voile 18 d'entraînement qui peuvent également l'une et/ou l'autre être circonférentiellement continues ou discontinues.

Lorsque lesdits moyens 24 de liaison sont réalisés sous la forme d'un cordon de soudure, en particulier circonférentiellement discontinu, ledit cordon de soudure est alors par exemple obtenu au moyen d'une soudure par apport de matière.

En variante, lesdits moyens 24 de liaison sont réalisés sous la forme d'une soudure par résistance par points. Dans ce procédé, les parties 16 et 22 de liaison de la coquille 12 d'entrée et du voile 18 d'entraînement sont superposées et sont serrées localement entre deux électrodes. L'ensemble ainsi formé est traversé par un courant de soudage qui provoque la fusion localisée des deux parties 16 et 22 dans la zone de positionnement des deux électrodes. Ce procédé de soudure ne nécessite pas d'apport de matière. Dans cet exemple, la soudure est circonférentiellement discontinue.

En variante, lesdits moyens 24 de liaison en rotation sans jeu angulaire de la coquille 12 d'entrée et du voile 18 d'entraînement sont réalisés par sertissage.

Le sertissage est par exemple un sertissage « à chaud » obtenu notamment en chauffant localement les parties de liaison de la coquille 12 d'entrée et du voile 18 d'entraînement à sertir ensemble, puis en appliquant sur au moins l'une desdites parties une charge propre à déformer la matière et à lier en rotation sans jeu angulaire et sans jeu axial lesdites parties.

Dans ce premier mode de réalisation, les moyens 24 de liaison de la coquille 12 d'entrée et du voile 18 d'entraînement étant de préférence réalisés par rivetage, lesdits moyens 24 de liaison sont constitués par au moins des rivets 25.

Pour le passage axial des rivets 25, le rebord 16 de la coquille 12 d'entrée comporte une série de trous 26 axiaux et le rebord 22 du voile 18 d'entraînement une série de trous 28 axiaux.

Lors de l'opération de rivetage, le rivet 25 gonfle au niveau des trous 26, 28 axiaux sous l'effet de l'effort de rivetage appliqué sur ses extrémités.

Les rivets 25 lient en rotation sans jeu angulaire, ni jeu axial, les rebords 16 et 22 formant respectivement lesdites parties de liaison d'orientation radiale de la coquille 12 d'entrée et du voile 18 d'entraînement.

De préférence, les rivets 25 et les trous 26 et 28 sont répartis circonférentiellement de manière régulière autour de l'axe O de rotation.

Dans au moins des portions liées, c'est-à-dire où lesdites parties 16 et 22 de liaison de la coquille 12 d'entrée et du voile 18 d'entraînement sont liées axialement par lesdits rivets 25 formant les moyens 24 de liaison, lesdites faces 17 et 21 radiales des parties de liaison sont accolées axialement l'une avec l'autre.

Dans un mécanisme 20 à double embrayage humide, l'huile circule radialement de l'intérieur vers l'extérieur et l'huile s'évacue à travers les parties 12A et 18A radialement externe d'orientation axiale de la coquille 12 d'entrée et du voile 18 d'entraînement pour ne pas s'accumuler, ni stagner à l'intérieur du volume interne délimité par la coquille 12 et le voile 18 dans lequel ledit mécanisme 20 est logé.

Avantageusement, le système 10 comporte des moyens d'évacuation d'huile qui sont agencés dans au moins une partie radialement externe de la coquille 12 d'entrée et/ou dans au moins une partie radialement externe du voile 18 d'entraînement pour permettre une évacuation de l'huile.

Les moyens d'évacuation d'huile du système 10 permettent une circulation de l'huile radialement vers l'extérieur, hors du volume interne comprenant ledit mécanisme 20 à double embrayage humide, en particulier à travers les parties 12A et 18A radialement externes et ceci pour assurer notamment un retour de l'huile généralement vers un carter (non représenté).

De préférence, lesdits moyens d'évacuation d'huile sont répartis circonférentiellement de manière régulière et/ou sont appariés symétriquement par rapport à l'axe O de rotation.

Avantageusement, lesdits moyens d'évacuation d'huile comportent au moins des trous 30 radiaux réalisés dans la partie 18A radialement externe d'orientation axiale du voile 18 d'entraînement et/ou dans la partie 12A radialement externe d'orientation axiale de la coquille 12 d'entrée.

Dans ce premier mode de réalisation et tel qu'illustré notamment par les figures 2 et 4, lesdits moyens d'évacuation d'huile comportent au moins des trous 30 radiaux réalisés dans la partie 18A radialement externe d'orientation axiale du voile 18 d'entraînement.

En variante non représentée, lesdits moyens d'évacuation d'huile peuvent également comporter des trous radiaux réalisés dans la partie 12A radialement externe d'orientation axiale de la coquille 12 d'entrée. Suivant un autre exemple de mise en oeuvre de l'invention, lesdits moyens d'évacuation d'huile comportent uniquement des trous radiaux réalisés dans la partie 12A radialement externe d'orientation axiale de la coquille 12 d'entrée.

De préférence, lesdits trous 30 radiaux réalisés au moins dans la partie 18A radialement externe d'orientation axiale du voile 18 d'entraînement comportent au moins une première série de trous 30A et une deuxième série de trous 30B.

La première série de trous 30A est située axialement en avant de la deuxième série de trous 30B. Les trous 30A sont axialement globalement alignés avec les trous 30B de sorte que lesdits trous 30A et 30B sont axialement les uns à côté des autres.

En variante, les trous 30A de la première série et les trous 30B de la deuxième série sont décalés angulairement les uns par rapport aux autres.

De manière non limitative, les trous 30A de la première série sont de section globalement circulaire et les trous 30B de la deuxième série sont de forme oblongue, avec leur dimension la plus grande orientée suivant la direction axiale.

Avantageusement, les trous 30A radiaux de la première série et/ou les trous 30B radiaux de la deuxième série sont répartis circonférentiellement de manière régulière autour de l'axe O de rotation.

De préférence, lesdits moyens d'évacuation d'huile comportent au moins un passage P radial d'évacuation d'huile ménagé circonférentiellement entre les parties 16 et 22 de liaison de la coquille 12 d'entrée et du voile 18 d'entraînement qui sont liées axialement sans jeu et en rotation sans jeu angulaire par les rivets 25 formant lesdits moyens 24 de liaison.

On a représenté schématiquement par une flèche, sur la figure 2, l'un des passages P radial d'évacuation d'huile.

De préférence, lesdits moyens d'évacuation d'huile comportent des trous radiaux réalisés dans l'une et/ou l'autre des parties 12A et 18A radialement externe d'orientation axiale de la coquille 12 d'entrée et du voile 18 d'entraînement et des passages P radiaux d'évacuation d'huile ménagés entre les parties 16 et 22 de liaison de la coquille 12 d'entrée et du voile 18 d'entraînement.

En variante non représentée, lesdits moyens d'évacuation d'huile sont constitués par des trous radiaux réalisés dans au moins l'une des parties 12A et 18A radialement externe d'orientation axiale de la coquille 12 d'entrée et du voile 18 d'entraînement ou des passages P radiaux d'évacuation d'huile ménagés entre les parties 16 et 22 de liaison de la coquille 12 d'entrée et du voile 18 d'entraînement.

La présence de passages P radiaux d'évacuation d'huile entre les rebords 16 et 22 de la coquille 12 d'entrée et du voile 18 d'entraînement peut permettre de réduire le nombre de trous radiaux lorsque lesdits moyens d'évacuation d'huile sont formés par une combinaison de trous et de tels passages P.

Avantageusement, la présence de passages P radiaux d'évacuation d'huile permet, pour une même section globale de passage de l'huile, de réduire le nombre total de trous percés radialement dans l'une et/ou l'autre desdites parties 12A et 18A radialement externe d'orientation axiale de la coquille 12 d'entrée et du voile 18 d'entraînement et ce faisant de réduire les coûts associés de perçage pour la fabrication du système 10 de transmission. La réduction du nombre total de trous percés radialement présente l'avantage d'améliorer la tenue mécanique et la rigidité torsionnelle de la coquille 12 d'entrée ou du voile 18 d'entraînement.

Ledit au moins un passage P radial d'évacuation d'huile est formé par un embouti 27 axial réalisé dans au moins une portion non liée par les moyens 24 de liaison de ladite au moins une partie 16 de liaison de la coquille 12 d'entrée et/ou dans au moins une portion non liée par les moyens 24 de liaison de ladite au moins une partie 22 de liaison du voile 18 d'entraînement.

Dans le premier mode de réalisation représenté aux figures 1 à 4, le rebord 16 de la coquille 12 d'entrée comporte une série d'emboutis 27 réalisés axialement vers l'arrière dans la face 17 avant du rebord 16 pour créer axialement une ouverture entre la portion non liée de la face 17 radiale comportant l'embouti 27 et la portion axialement en vis à vis de la face 21 radiale du rebord 22 du voile 18 d'entraînement.

De préférence, les emboutis 27 pour former des passages P radiaux de circulation d'huile, entre la coquille 12 d'entrée et le voile 18 d'entraînement, au niveau des portions non liées axialement par les rivets 25, sont réalisés dans le seul rebord 16.

En variante non représentée, le rebord 22 du voile 18 d'entraînement comporte des emboutis réalisés axialement vers l'avant dans la face 21 radiale dudit rebord 22 pour former lesdits passages P radiaux de circulation d'huile.

En variante non représentée, le rebord 16 de la coquille 12 d'entrée et le rebord 22 du voile 18 d'entraînement comportent chacun de tels emboutis axiaux pour former lesdits passages P radiaux de circulation d'huile, un embouti ménagé dans l'un 16 des rebords étant positionné angulairement pour être aligné axialement avec un autre embouti ménagé dans l'autre 22 des rebords.

De préférence, les passages P radiaux de circulation d'huile formés par emboutissage axial de l'un et/ou l'autre des rebords 16 et 22 sont répartis circonférentiellement de manière régulière.

De préférence, les passages P radiaux de circulation d'huile formés par emboutissage axial de l'un et/ou l'autre des rebords 16 et 22 sont en nombre pair et appariés symétriquement par rapport à l'axe O de rotation.

En variante, les passages P radiaux de circulation d'huile formés par emboutissage axial de l'un et/ou l'autre des rebords 16 et 22 sont en nombre impair.

Avantageusement, la coquille 12 d'entrée comporte une partie 12A radialement externe d'orientation axiale qui est inclinée, par rapport à l'orientation axiale, pour guider l'huile radialement vers l'extérieur en direction des moyens d'évacuation et/ou le voile 18 d'entraînement comporte une partie radialement externe d'orientation axiale qui est inclinée, par rapport à l'orientation axiale, pour guider l'huile radialement vers l'extérieur en direction des moyens d'évacuation.

La partie 12A radialement externe d'orientation axiale de la coquille 12 d'entrée est inclinée par rapport à l'orientation axiale définie par l'axe O. Le rayon centré sur l'axe O de la partie 12A radialement externe d'orientation axiale croît axialement, de l'arrière vers l'avant, en direction de l'extrémité comportant ladite au moins une partie 16 de liaison d'orientation radiale.

La coquille 12 d'entrée comporte une partie 12A radialement externe d'orientation axiale qui est inclinée d'un angle aigu dont la valeur est déterminée en fonction des applications et des moyens d'évacuation d'huile en particulier.

Ledit angle aigu est obtenu par l'intersection d'une droite moyenne correspondant à ladite partie 12A radialement externe d'orientation axiale avec une droite d'orientation axiale qui, parallèle à l'axe O, s'étend sur un rayon correspondant à une portion coudée de jonction, de ladite partie 12A radialement externe d'orientation axiale et de la partie radialement interne d'orientation radiale de la coquille 12 qui est solidaire du moyeu 14.

La partie 18A radialement externe d'orientation axiale du voile 18 d'entraînement est inclinée par rapport à l'orientation axiale définie par l'axe O. Le rayon centré sur l'axe O de ladite partie 18A radialement externe d'orientation axiale croît axialement, de l'avant vers l'arrière, en direction de l'extrémité comportant ladite au moins une partie 22 de liaison d'orientation radiale.

Le voile 18 d'entraînement comporte une partie 18A radialement externe d'orientation axiale qui est inclinée d'un angle aigu dont la valeur est déterminée en fonction des applications et des moyens d'évacuation d'huile en particulier.

Ledit angle aigu est obtenu par l'intersection d'une droite moyenne correspondant à ladite partie 18A radialement externe d'orientation axiale avec une droite d'orientation axiale qui, parallèle à l'axe O, s'étend sur un rayon correspondant à une portion coudée de jonction, de ladite partie 18A radialement externe d'orientation axiale et de la partie radialement interne d'orientation radiale du voile 18 d'entraînement qui est liée en rotation au mécanisme 20.

Avantageusement, l'inclinaison de l'une et/ou l'autre desdites parties 12A et 18A radialement externe d'orientation axiale permet de guider l'huile en direction des moyens d'évacuation d'huile, tels que les trous 30A, 30b et/ou les passages P radiaux de circulation d'huile ménagés entre les rebords 16 et 22, circonférentiellement entre deux rivets 25 successifs.

Le mécanisme 20 à double embrayage humide est commandé pour accoupler sélectivement ledit arbre menant à un premier arbre A1 mené et à un deuxième A2 arbre mené.

De préférence, le premier arbre A1 mené et le deuxième A2 arbre mené sont coaxiaux.

Le mécanisme 20 à double embrayage humide comporte au moins un premier embrayage E1 et un deuxième embrayage E2, qui sont respectivement de type multidisques.

La coquille 12 d'entrée et le voile 18 d'entraînement liées en rotation par leur partie 16, 22 de liaison d'orientation radiale délimitent ensemble un volume à l'intérieur duquel sont notamment logés lesdits premier embrayage E1 et deuxième embrayage E2 du mécanisme 20 à double embrayage humide.

Le premier arbre A1 mené est entraîné en rotation lorsque ledit premier embrayage E1 est fermé et le deuxième A2 arbre mené est entraîné en rotation lorsque ledit deuxième embrayage E2 est fermé, lesdits premier et deuxième arbres A1, A2 menés étant respectivement reliés à une boîte de vitesses équipant le véhicule automobile.

Dans le mécanisme 20 à double embrayage humide, le premier embrayage E1 sert par exemple à la fois au démarrage et à l'engagement des rapports impairs et le deuxième embrayage E2 prend alors en charge les rapports pairs et la marche arrière, en variante les rapports pris en charge par lesdits premier embrayage E1 et deuxième embrayage E2 sont inversés.

Le premier embrayage E1 est par exemple agencé axialement à l'avant du côté de la boîte de vitesses et le deuxième embrayage E2 est par exemple agencé axialement à l'arrière du côté moteur, du moyeu 14 d'entrée.

Le premier embrayage E1 et le deuxième embrayage E2 transmettent alternativement la puissance d'entrée (le couple et la vitesse) de l'arbre menant, que reçoit la coquille 12 d'entrée du système 10, à l'un des deux arbres A1, A2 menés, en fonction de l'état ouvert ou fermé de chacun des embrayages E1 et E2.

De préférence, le premier embrayage E1 et le deuxième embrayage E2 sont à l'état ouvert, encore dit « normalement ouvert », et sont actionnés sélectivement en fonctionnement par un dispositif de commande (non représenté) pour passer de l'état ouvert à l'état fermé.

Le mécanisme 20 à double embrayage humide est commandé généralement hydrauliquement par l'intermédiaire d'un fluide sous pression tel que de l'huile.

Pour commander sélectivement le changement d'état du premier embrayage E1 et du deuxième embrayage E2 du mécanisme 20 du système 10 de transmission, le dispositif de commande comporte au moins un arbre 32 de commande comportant des canaux 34 d'alimentation en huile, par exemple au nombre de quatre tel que représenté sur la figure 1.

Le mécanisme 20 comporte au moins un moyeu 35 comportant quatre perçages 36, 37, 38, 39 radiaux qui sont chacun reliés à l'un des canaux 34 d'alimentation en huile, les deux perçages 36 et 37 sont associés à la commande du premier embrayage E1 situé axialement à l'avant et les deux autres perçages 38 et 39 sont associés à la commande du deuxième embrayage E2 situé axialement à l'arrière.

Le premier embrayage E1 de type multidisques comporte un piston 40 qui est mobile axialement, ici de l'avant vers l'arrière, entre une position débrayée et une position embrayée qui correspondent respectivement aux états ouvert et fermé du premier embrayage E1.

Le piston 40 est commandé en déplacement au moyen d'une chambre 42 de commande délimitée axialement par une face avant d'une partie radiale interne du piston 40 et par la face radiale arrière d'une pièce 44 de fermeture.

La pièce 44 de fermeture porte à son extrémité radiale externe des moyens 46 d'étanchéité qui coopèrent avec une face interne d'une partie axiale du piston 40 et à son extrémité radiale interne des moyens 48 d'étanchéité qui coopèrent avec une surface 50 axiale externe du moyeu 35.

De préférence, la pièce 44 de fermeture est associée à une pièce 52 d'appui qui est bloquée axialement par un anneau 54 d'arrêt monté dans une gorge 55 du moyeu 35.

Avantageusement, les efforts axiaux liés à la mise en pression de la chambre 42 de commande sont repris par la pièce 52 d'appui et non par la pièce 44 de fermeture pourtant les moyens 46 et 48 d'étanchéité.

Le piston 40 comporte à son extrémité radiale interne des moyens 56 d'étanchéité qui coopèrent avec la surface 50 axiale externe du moyeu 35, lorsque le piston 40 est déplacé axialement entre les positions débrayée et embrayée par la mise en pression de la chambre 42 de commande.

La pièce 44 de fermeture de la chambre 42 de commande du piston 40 comporte, entre ses deux extrémités radiales portant les moyens d'étanchéité 46 et 48, une portion convexe qui coopère avec la face radiale avant du piston 40 axialement en vis-à-vis.

Le volume de la chambre 42 de commande comporte une partie extérieure et une partie intérieure, située radialement de part et d'autre de ladite portion convexe de la pièce 44 de fermeture.

La chambre 42 de commande est alimentée en huile par l'intermédiaire du perçage 37 qui traverse radialement le moyeu 35, le perçage 37 mettant en communication ladite chambre 42 de commande avec l'un des canaux 34 d'alimentation en huile.

La chambre 42 de commande du piston 40 du premier embrayage E1 est associée à une chambre 58 d'équilibrage délimitée au moins par un piston 60 d'équilibrage.

Avantageusement, le voile 18 d'entraînement constitue le piston 60 d'équilibrage du premier embrayage E1.

Le voile 18 d'entraînement assure donc une double fonction, de transmission de la puissance d'entrée d'une part, et de piston d'équilibrage dans le fonctionnement du premier embrayage E1, d'autre part.

Plus précisément, la fonction du piston 60 d'équilibrage du premier embrayage E1 est assurée principalement par la partie radiale interne dudit voile 18.

En variante, le piston 60 d'équilibrage et le voile 18 d'entraînement sont réalisés sous la forme de deux pièces distinctes.

La chambre 58 d'équilibrage du premier embrayage E1 est délimitée axialement par la face radiale avant du piston 60 d'équilibrage formé par la partie radialement interne du voile 18 d'entraînement et par la face radiale arrière du piston 40.

La chambre 58 d'équilibrage est alimentée en huile par l'intermédiaire du perçage 36 que comporte le moyeu 35.

L'étanchéité de la chambre 58 d'équilibrage est assurée radialement à l'extérieur par des moyens 62 d'étanchéité qui sont portés par le piston 40 et qui coopèrent avec la face interne d'une partie axiale du piston 60 d'équilibrage formé par le voile 18 d'entraînement.

Le piston 40 du premier embrayage E1 s'étend radialement et il est disposé axialement entre la chambre 42 de commande, située axialement à l'avant, et la chambre 58 d'équilibrage, située axialement à l'arrière.

Le piston 40 du premier embrayage E1 comporte, à son extrémité radiale extérieure, une partie d'actionnement formée par des doigts 64 qui s'étendent axialement vers l'arrière pour agir sur un ensemble multidisques du premier embrayage E1.

Avantageusement, le voile 18 d'entraînement comporte des ouvertures 66 pour le passage axial desdits doigts 64 formant la partie d'actionnement du piston 40 de l'embrayage E1.

Le piston 40 est commandé pour venir serrer axialement, en position embrayée, ledit ensemble multidisques du premier embrayage E1 contre des moyens 70 de réaction.

Dans le système 10 de transmission représenté aux figures 1 et 2, le premier embrayage E1 et le deuxième embrayage E2 dudit mécanisme 20 à double embrayage humide sont axialement juxtaposés, le premier embrayage E1 et le deuxième embrayage E2 étant agencés axialement de part et d'autre desdits moyens 70 de réaction.

De préférence, lesdits moyens 70 de réaction comportent au moins un premier élément 68 de réaction et un deuxième élément 72 de réaction qui, respectivement associés au premier embrayage E1 et au deuxième embrayage E2, sont séparés axialement l'un de l'autre par un jeu « j ».

Avantageusement, le premier élément 68 de réaction et le deuxième élément 72 de réaction sont séparés axialement l'un de l'autre par un espace vide correspondant audit jeu « j ».

Grâce au jeu « j » axial, le premier élément 68 de réaction et le deuxième élément 72 de réaction sont libres de se déplacer axialement, indépendamment l'un de l'autre. Le déplacement axial correspond à la flexion soit du premier élément 68 de réaction, soit du deuxième élément 72 de réaction sous la charge axiale transmise par le piston 40.

Avantageusement, on supprime tout risque d'interaction entre le premier élément 68 de réaction du premier embrayage E1 et le deuxième élément 72 de réaction du deuxième embrayage E2 lors du fonctionnement du mécanisme 20.

Le premier élément 68 de réaction comporte une face 69 de réaction orientée vers l'avant en direction du premier embrayage E1 et le deuxième élément 72 de réaction comporte une face 71 de réaction orientée vers l'arrière en direction du deuxième embrayage E2.

Dans le premier mode de réalisation représenté sur les figures 1 à 4, le premier élément 68 de réaction et le deuxième 72 élément de réaction sont réalisés sous la forme d'au moins deux pièces distinctes.

Par au moins deux pièces distinctes, on entend que le premier élément 68 de réaction et le deuxième 72 élément de réaction sont des pièces indépendantes l'une de l'autre et cela au moins jusqu'à l'assemblage desdits éléments 68, 72 au sein du mécanisme 20 à double embrayage humide.

Le premier élément 68 de réaction et le deuxième élément 72 de réaction sont par exemple réalisés en tôle.

En variante non représentée, le premier élément 68 de réaction et le deuxième élément 72 de réaction sont réalisés en une seule pièce, de manière à former avant assemblage un ensemble monobloc.

Le premier élément 68 de réaction et le deuxième élément 72 de réaction, réalisés en une ou au moins deux pièces, sont liés en rotation audit au moins un moyeu 35 du mécanisme 20.

De préférence, ledit au moins un moyeu 35 est réalisé en deux parties, respectivement un premier moyeu associé au premier élément 68 de réaction et un deuxième moyeu associé au deuxième élément 72 de réaction.

En variante non représentée, ledit au moins un moyeu 35 est réalisé en une seule pièce, monobloc.

De préférence, le premier élément 68 de réaction et le deuxième 72 élément de réaction sont liés en rotation par soudage audit au moins un moyeu 35, tel qu'un moyeu commun ou des premier et deuxième moyeux.

En variante, le premier élément 68 de réaction et le deuxième 72 élément de réaction sont liés en rotation par rivetage audit au moins un moyeu 35, tel qu'un moyeu commun ou des premier et deuxième moyeux.

Avantageusement, ledit au moins un moyeu 35, en une seule pièce ou en deux parties, est indépendant desdits éléments 68 et 72 de réaction de manière à pouvoir notamment être réalisé dans un matériau différent de celui employé pour les éléments 68 et 72 de réaction, selon un procédé de fabrication choisi.

En variante non représentée, le premier élément 68 de réaction est réalisé en une seule pièce avec le premier moyeu du premier embrayage E1 et le deuxième élément 72 de réaction est réalisé en une seule pièce avec ledit deuxième moyeu du deuxième embrayage E2.

Le premier élément 68 de réaction et le deuxième élément 72 de réaction comportent au moins un bossage d'appui qui, convexe s'étend axialement en direction de l'ensemble multidisques de celui desdits premier et deuxième embrayages E1, E2 auquel l'élément de réaction est associé.

Le premier élément 68 de réaction comporte au moins un bossage 73 d'appui dont la face radiale avant constitue ladite face 69 de réaction.

Le deuxième élément 72 de réaction comporte au moins un bossage 75 d'appui dont la face radiale arrière constitue ladite face 71 de réaction.

Les bossages 73 et 75 d'appui sont par exemple obtenus par emboutissage desdits éléments 68 et 72 de réaction.

De préférence, ledit au moins bossage 73 d'appui du premier élément 68 de réaction et ledit au moins un bossage 75 axial d'appui du deuxième élément 72 de réaction sont situés radialement sur un même rayon par rapport à l'axe O.

Le premier élément 68 de réaction et le deuxième élément 72 de réaction sont circonférentiellement continus, de manière à former un disque.

En variante non représentée, le premier élément 68 de réaction et le deuxième élément 72 de réaction comportent au moins une partie radiale externe circonférentiellement discontinue qui est formée d'une pluralité de bras de réaction.

Selon cette variante, l'élément 68, 72 de réaction comporte de préférence une partie radiale interne circonférentiellement continue formée par un anneau, notamment pour la liaison en rotation dudit élément de réaction avec ledit au moins un moyeu 35 le supportant.

Dans une telle variante, les bras de réaction s'étendent radialement vers l'extérieur à partir de la partie radiale interne annulaire et chaque bras de réaction est séparé du bras de réaction adjacent par une fente radiale.

Les bras de réaction selon cette variante comportent avantageusement des bossages 73 et 75 d'appui portant respectivement les faces 69 et 71 de réaction.

Avantageusement, le premier élément 68 de réaction et le deuxième élément 72 de réaction séparés axialement par le jeu « j » comportent des moyens raidisseur pour les raidir et limiter axialement le débattement du premier élément 68 de réaction et du deuxième élément 72 de réaction.

De tels moyens raidisseur sont par exemple formés par des emboutis réalisés dans le premier élément 68 de réaction et le deuxième élément 72 de réaction, radialement en dessous des bossages 73 et 75 d'appui.

Le premier embrayage E1 et le deuxième embrayage E2 dudit mécanisme 20 à double embrayage humide sont actionnés axialement en sens opposé, soit axialement de l'avant vers l'arrière contre la face 69 par le piston 40 du premier embrayage E1 et axialement de l'arrière vers l'avant contre la face 71 par celui du deuxième embrayage E2.

L'ensemble multidisques du premier embrayage E1 comporte au moins des disques 74 de friction qui sont liés en rotation audit premier arbre A1 mené par un porte-disques 76 extérieur. Le porte-disques 76 extérieur forme l'élément de sortie du premier embrayage E1.

Le porte-disques 76 extérieur comporte à la périphérie radiale extérieure une partie axiale qui est munie d'une denture 77 destinée à coopérer avec une denture 78 complémentaire que comporte chaque disque 74 de friction à sa périphérie radiale extérieure.

Le porte-disques 76 extérieur comporte des trous radiaux répartis circonférentiellement dans ladite partie axiale munie de la denture 77 et destinés à être traversés par l'huile introduite dans l'ensemble multidisques du premier embrayage E1.

Le porte-disques 76 extérieur est lié en rotation par engrènement avec les disques 74 de friction et par une liaison cannelée avec ledit premier arbre A1 mené.

Le porte-disques 76 extérieur comporte un moyeu 80 de sortie qui s'étend axialement et comporte radialement à l'intérieur des cannelures 82 axiales qui engrènent avec des cannelures 83 complémentaires du premier arbre A1 mené.

Le porte-disques 76 extérieur présente globalement une forme en « L » dont l'extrémité radiale intérieure, à l'opposé de la denture 77, est solidaire du moyeu 80 de sortie.

De préférence, le porte-disques 76 extérieur et le moyeu 80 de sortie sont fixés ensemble par soudage, en variante par rivetage.

Les disques 74 de friction comportent chacun sur leurs faces radiales axialement opposées, respectivement avant et arrière, une garniture 84 de friction.

L'ensemble multidisques du premier embrayage E1 comporte des flasques 86 qui sont munis à leur périphérie radiale interne d'une denture 88 pour les lier en rotation avec un porte-disques 90 intérieur.

Le porte-disques 90 intérieur comporte à son extrémité radiale externe une partie axiale comportant une denture 92 externe qui, complémentaire, engrène avec la denture 88 interne de chacun des flasques 86 pour les lier en rotation sans jeu.

Le porte-disques 90 intérieur comporte des trous radiaux répartis circonférentiellement dans ladite partie axiale munie de la denture 92 et destinés à être traversés par l'huile introduite dans l'ensemble multidisques du premier embrayage E1.

Les disques 74 de friction sont, unitairement, axialement interposés entre deux flasques 86 successifs. Chacune des garnitures 84 de friction d'un des disques 74 de friction coopère en position embrayée avec l'une des faces radiale des flasques 86 agencés axialement de part et d'autre, en avant et en arrière, dudit disque 74 de friction.

L'ensemble multidisques du premier embrayage E1 comporte axialement un flasque 86 à chacune de ses extrémités, respectivement un flasque 86 avant dont la face radiale avant est destinée à coopérer en position embrayée avec les doigts 64 formant la partie d'actionnement du piston 40 et un flasque 86 arrière dont la face radiale arrière est destinée à coopérer avec la face 69 avant du premier élément 68 de réaction.

Le premier embrayage E1 comporte des moyens 94 élastiques de rappel pour rappeler automatiquement le piston 40 en position débrayée, correspondant à un état ouvert de l'embrayage.

De préférence, les moyens 94 élastiques de rappel du piston 40 sont formés par des rondelles élastiques, telles que des rondelles ondulées de type « Onduflex ™ ».

Les rondelles 94 élastiques sont interposées axialement entre les flasques 86 et agencées radialement à l'intérieur des disques 74 de friction, en dessous des garnitures 84 de friction. Chaque rondelle 94 élastique est axialement en appui contre la face radiale arrière d'un flasque 86 et contre la face radiale avant d'une autre flasque 86 axialement adjacent.

Les moyens 94 élastiques de rappel sollicitent axialement les flasques 86 et ce faisant facilite la libération des disques 74 de friction et le rappel du piston 40 vers la position débrayée.

En variante non représentée, les moyens 94 de rappel du piston d'un embrayage sont formés par au moins un ressort qui est par exemple agencé radialement entre l'axe O et le porte-disques 90 intérieur pour rappeler automatiquement le piston 40 vers la position débrayée.

Pour transmettre directement la puissance d'entrée, le mécanisme 20 à double embrayage humide comporte des moyens de liaison qui, pour le premier embrayage E1, lient axialement sans jeu au moins le voile 18 d'entraînement, le porte-disques 90 intérieur et les moyens 70 de réaction.

Lorsqu'en variante, le voile 18 d'entraînement et le piston 60 d'équilibrage sont réalisés en deux pièces distinctes, les moyens de liaison lient alors également ledit piston 60 d'équilibrage axialement sans jeu avec le voile 18 d'entraînement, le porte-disques 90 intérieur et les moyens 70 de réaction.

Le piston 60 d'équilibrage du premier embrayage E1 étant formé par le voile 18 d'entraînement, le mécanisme 20 comporte une pièce en moins avec pour avantages notamment un moindre coût, une simplification et une compacité axiale accrue.

De préférence, les moyens de liaison sont réalisés par rivetage. En variante non représentée, les moyens de liaison sont réalisés par soudage, notamment par soudage laser par transparence.

Le voile 18 d'entraînement comporte des emboutis 96 qui, répartis circonférentiellement, font saillis axialement vers l'arrière par rapport à la face radiale arrière du voile 18 d'entraînement formant le piston 60 d'équilibrage.

Les emboutis 96 entourent chacun un trou 98 destiné à être traversé axialement par l'un des rivets 95 formant lesdits moyens de liaison.

Dans ce premier mode de réalisation, les rivets 95 formant les moyens de liaison sont avantageusement communs au premier embrayage E1 et au deuxième embrayage E2 qui va maintenant être décrit.

Le deuxième embrayage E2 du mécanisme 20 à double embrayage humide du système 10 de transmission est de conception similaire à celle du premier embrayage E1, le deuxième embrayage E2 étant de type multidisques.

Avantageusement, on se reportera au besoin pour la description du deuxième embrayage E2 à la description détaillée du premier embrayage E1 donnée précédemment.

Le deuxième embrayage E2 comporte un piston 100 qui est mobile axialement, ici de l'arrière vers l'avant, entre une position débrayée et une position embrayée correspondant respectivement aux états ouvert et fermé du deuxième embrayage E2 du mécanisme 20.

Le piston 40 du premier embrayage E1 et le piston 100 du deuxième embrayage E2 dudit mécanisme 20 à double embrayage humide se déplacent axialement en sens opposé pour passer par exemple de la position débrayée à la position embrayée.

Le piston 100 du deuxième embrayage E2 est commandé en déplacement au moyen d'une chambre 102 de commande délimitée axialement par une face arrière d'une partie radiale intérieure du piston 100 et par la face radiale avant d'une pièce 104 de fermeture.

La chambre 102 de commande est alimentée sélectivement en huile par le perçage 38 traversant radialement le moyeu 35 et relié à l'un des canaux 34 d'alimentation de l'arbre 32 de commande.

La pièce 104 de fermeture comporte à son extrémité radiale externe des moyens 106 d'étanchéité qui coopèrent avec une face interne d'une partie axiale du piston 100 et, à son extrémité radiale interne, des moyens 108 d'étanchéité qui coopèrent avec une surface 110 externe du moyeu 35.

La surface 110 associée au deuxième embrayage E2 est située axialement en arrière par rapport aux moyens 70 de réaction agencés entre lesdits embrayages E1 et E2, soit axialement à l'opposé de la surface 50 associée au piston 40 du premier embrayage E1.

De préférence, la pièce 104 de fermeture est associée à une pièce 112 d'appui qui est bloquée axialement par un anneau 114 d'arrêt monté dans une gorge 115 du moyeu 35.

Le piston 100 comporte à son extrémité radiale interne des moyens 116 d'étanchéité qui coopèrent avec la surface 110 externe du moyeu 35, lorsque le piston 100 est déplacé axialement entre les positions débrayée et embrayée par la mise en pression de la chambre 102 de commande.

Comme la pièce 44 de fermeture pour le premier embrayage E1, la pièce 104 de fermeture est conformée, globalement entre ses extrémités radiales portant les moyens 106 et 108 d'étanchéité, pour venir axialement coopérer avec la face radiale arrière du piston 100.

La chambre 102 de commande est associée à une chambre 118 d'équilibrage délimitée par au moins un piston 120 d'équilibrage.

Par comparaison avec le piston 60 d'équilibrage du premier embrayage E1 formé par le voile 18 d'entraînement, le piston 120 d'équilibrage du deuxième embrayage E2 est une pièce distincte.

La chambre 118 d'équilibrage est délimitée axialement par la face radiale arrière du piston 120 d'équilibrage et par la face radiale avant du piston 100.

L'étanchéité de la chambre 118 d'équilibrage est assurée radialement à l'extérieur par des moyens 122 d'étanchéité qui sont portés par le piston 100 et qui coopèrent avec la face interne d'une partie axiale du piston 120 d'équilibrage.

La partie radiale interne du piston 100 s'étend radialement et elle est disposée axialement entre la chambre 102 de commande, située axialement en arrière, et la chambre 118 d'équilibrage, située axialement en avant.

Le piston 100 du deuxième embrayage E2 comporte, à son extrémité radiale extérieure, une partie 125 d'actionnement formée par un bossage qui s'étend axialement vers l'avant en direction d'un ensemble multidisques du deuxième embrayage E2.

La partie 125 d'actionnement du piston 100 du deuxième embrayage E2 est circonférentiellement continue, en variante discontinue.

Avantageusement, la partie d'actionnement formée par les doigts 64 du piston 40 du premier embrayage E1 et la partie 125 d'actionnement du piston 100 du deuxième embrayage E2 dudit mécanisme 20 sont située radialement sur un même rayon centré sur l'axe O du système 10.

Le piston 40 du premier embrayage E1 et le piston 100 du deuxième embrayage E2 appliquent chacun un effort de serrage sur l'ensemble multidisques qui leur est associé selon la direction axiale mais suivant un sens opposé, comme est opposée la réaction sur les faces 69 et 71, respectivement du premier élément 68 de réaction et du deuxième élément 72 formant lesdits moyens 70 de réaction.

L'ensemble multidisques du deuxième embrayage E2 comporte des disques 124 de friction qui sont liés en rotation au deuxième arbre A2 mené par un porte-disques 126 extérieur formant l'élément de sortie de l'embrayage E2.

Le porte-disques 126 extérieur comporte à la périphérie radiale extérieure une partie axiale qui est munie d'une denture 127 interne destinée à coopérer avec une denture 128 externe que comporte chacun des disques 124 de friction.

Le porte-disques 126 extérieur comporte des trous radiaux répartis circonférentiellement dans ladite partie axiale munie de la denture 127 et destinés à être traversés par l'huile introduite dans l'ensemble multidisques du deuxième embrayage E2.

Le porte-disques 126 extérieur est lié en rotation par engrènement avec les disques 124 de friction et par une liaison cannelée avec ledit deuxième arbre A2 mené.

Le porte-disques 126 extérieur comporte un moyeu 130 de sortie qui s'étend axialement et comporte radialement à l'intérieur des cannelures 132 qui engrènent avec des cannelures 133 complémentaires du deuxième arbre A2 mené.

De préférence, ledit porte-disques 126 et le moyeu 130 de sortie sont fixées ensemble par soudage, en variante par rivetage.

Les disques 124 de friction comportent chacun sur leurs faces radiales axialement opposées, respectivement avant et arrière, une garniture 134 de friction.

L'ensemble multidisques du deuxième embrayage E2 comporte des flasques 136 qui sont munis à leur périphérie radiale interne d'une denture 138 pour les lier en rotation avec un porte-disques 140 intérieur.

Le porte-disques 140 intérieur comporte à son extrémité radiale externe une partie axiale comportant une denture 142 externe qui engrène avec la denture 138 interne de chacun des flasques 136 pour les lier en rotation sans jeu.

Le porte-disques 140 intérieur comporte des trous radiaux répartis circonférentiellement dans ladite partie axiale munie de la denture 142 et destinés à être traversés par l'huile introduite dans l'ensemble multidisques du deuxième embrayage E2.

Les disques 124 de friction sont, unitairement, axialement interposés entre deux flasques 136 consécutifs.

Chacune des garnitures 134 de friction d'un des disques 124 de friction coopère en position embrayée avec une face radiale de l'un des deux flasques 136 situés axialement de part et d'autre.

L'ensemble multidisques du deuxième embrayage E2 comporte axialement un flasque 136 à chacune de ses extrémités, respectivement un flasque 136 arrière dont la face radiale arrière est destinée à coopérer, en position embrayée, avec la partie 125 d'actionnement du piston 100 et un flasque 136 avant dont la face radiale avant est destinée à coopérer avec la face 71 arrière du deuxième élément 72 de réaction.

Le deuxième embrayage E2 comporte des moyens 144 élastiques de rappel pour rappeler automatiquement le piston 100 en position débrayée, correspondant à un état ouvert de l'embrayage.

De préférence et comme pour le premier embrayage E1, les moyens 144 élastiques de rappel du piston 100 sont formés par des rondelles élastiques, telles que des rondelles ondulées de type « Onduflex ™».

Pour transmettre directement la puissance d'entrée, le mécanisme 20 à double embrayage humide comporte des moyens de liaison qui, pour le deuxième embrayage E2, lient axialement sans jeu au moins le piston 120 d'équilibrage, le porte-disques 140 intérieur du deuxième embrayage E2 et lesdits moyens 70 de réaction.

Avantageusement, les moyens de liaison du deuxième embrayage E2 sont réalisés par rivetage.

De préférence, lesdits moyens de liaison du deuxième embrayage E2 sont formés par des rivets 95 communs avec le premier embrayage E1 de sorte que lesdits moyens de liaison sont formés par les seuls rivets 95.

Tel que représenté sur la figure 1, les moyens de liaison du mécanisme 20 à double embrayage humide sont agencés axialement entre le piston 50 du premier embrayage E1 et le piston 100 du deuxième embrayage E2.

Les moyens de liaison lient axialement sans jeu au moins ledit voile 18 d'entraînement, le porte-disques 90 intérieur du premier embrayage E1, le porte-disques 140 intérieur du deuxième embrayage E2 et lesdits moyens 70 de réaction.

Les rivets 95 formant les moyens de liaison permettent de lier simultanément le voile 18 d'entraînement tant au premier embrayage E1 qu'au deuxième embrayage E2 du mécanisme et de transmettre directement la puissance d'entrée délivrée au système 10 par l'arbre menant.

De préférence, les moyens de liaison sont utilisés pour assurer la fixation du piston 60 d'équilibrage du premier embrayage E1 formé ici par le voile 18 et du piston 120 d'équilibrage du deuxième embrayage E2.

Avantageusement, lesdits moyens 95 de liaison lient également axialement sans jeu le piston 60 d'équilibrage du premier embrayage E1 et le piston 120 d'équilibrage du deuxième embrayage E2 du mécanisme 20.

Les moyens 70 de réaction sont interposés axialement entre le porte-disques 90 intérieur du premier embrayage E1 et le porte-disques 140 intérieur du deuxième embrayage E2 pour transmettre directement la puissance d'entrée au mécanisme 20.

Comme le voile 18 d'entraînement formant le piston 60 d'équilibrage du premier embrayage E1, le piston 120 d'équilibrage du deuxième embrayage E2 comporte des emboutis 146 qui entourent chacun un trou 148 de passage d'un des rivets 95 formant les moyens de liaison.

La tête avant de chaque rivet 95 est axialement en appui contre la face radiale avant du piston 60 d'équilibrage, ici le voile 18 d'entraînement, plus précisément est reçue à l'avant dans le logement formé par l'embouti 96 autour du trou 98.

La tête avant du rivet 95 est avantageusement comprise axialement dans l'épaisseur du voile 18 d'entraînement formant le piston 60 d'équilibrage du premier embrayage E1.

Ledit voile 18 d'entraînement formant le piston 60 d'équilibrage du premier embrayage E1 comporte une série de trous 98 pour le passage du corps des rivets 95.

Le porte-disques 90 intérieur du premier embrayage E1 comporte dans sa partie radiale interne une série de trous 97 axiaux pour le passage des rivets 95.

Les moyens 70 de réaction comportent une série de trous 150 axiaux pour le passage des rivets 95

Le porte-disques 140 du deuxième embrayage E2 comporte une série de trous 147 pour le passage axial des rivets 95 et le piston 120 d'équilibrage une série de trous 148.

Tel que représenté sur la coupe de la figure 1, les rivets 95 formant les moyens de liaison lient axialement ensemble sans jeu le voile 18 d'entraînement, le porte-disques 90 intérieur du premier embrayage E1, les moyens 70 de réaction qui sont de préférence constitués du premier élément 68 de réaction et du deuxième élément 72 de réaction respectivement associés aux premier et au deuxième embrayages E1 et E2, le porte-disques 140 intérieur du deuxième embrayage E2 et le piston 120 d'équilibrage du deuxième embrayage E2.

Lorsqu'en variante, le piston 60 d'équilibrage est une pièce distincte du voile 18 d'entraînement, le piston 60 d'équilibrage est alors avantageusement également lié axialement sans jeu par les rivets 95 afin d'être maintenu en position.

Comme la tête avant, la tête arrière de chaque rivet 95 est axialement en appui contre la face radiale arrière du piston 120 d'équilibrage, plus précisément est reçue dans le logement arrière formé par l'embouti 146 autour du trou 148.

La tête arrière du rivet 95 est comprise axialement dans l'épaisseur du piston 120 d'équilibrage du deuxième embrayage E2.

Le corps de chaque rivet 95 traverse axialement, successivement de l'arrière vers l'avant, le trou 148 du piston 120 d'équilibrage, le trou 147 du porte-disques 140 intérieur de E2, le trou 150 à travers le premier élément 68 de réaction et le deuxième élément 72 de réaction formant les moyens 70 de réaction, le trou 97 du porte-disques 90 intérieur de E1, le trou 98 du voile 18 formant le piston 60 d'équilibrage du premier embrayage E1.

Les moyens de liaison formés par les rivets 95 ne font cependant pas obstacle à la circulation de l'huile radialement de l'intérieur vers l'extérieur destinée notamment à lubrifier les garnitures 84 et 134 de friction des embrayages E1 et E2.

Les emboutis 96 du voile 18 formant le piston 50 d'équilibrage, comme les emboutis 146 du piston 120 d'équilibrage, sont circonférentiellement discontinus.

Le nombre d'emboutis 96 et 146 correspond au nombre de rivets 95 utilisés pour réaliser la liaison axiale sans jeu, par exemple au nombre de douze.

Tel que représenté sur la figure 2, il existe grâce aux emboutis 96 un jeu axial entre la face radiale arrière du piston 60 d'équilibrage formé par le voile 18 et la face radiale avant du porte-disques 90 intérieur permettant une circulation radiale de l'huile vers l'ensemble multidisques du premier embrayage E1.

Avantageusement, des passages d'huile sont ainsi ménagés pour permettre une circulation d'huile, radialement vers l'extérieur, au niveau des moyens de liaison formés par les rivets 95.

L'huile circule, radialement de l'intérieur vers l'extérieur suivant des flèches représentées sur la figure 2, en empruntant des passages F radiaux d'huile délimités circonférentiellement par deux emboutis 96 consécutifs du voile 18 formant le piston 60 d'équilibrage du premier embrayage E1 ou deux emboutis 146 circonférentiellement consécutifs du piston 120 d'équilibrage du deuxième embrayage E2.

Le flux d'huile circule radialement vers l'extérieur de part et d'autre des parties radiales du moyeu 35 en deux pièces associées au premier élément 68 et au deuxième élément 72 formant lesdits moyens 70 de réaction.

Pour le premier embrayage E1, le flux d'huile traverse ensuite radialement les trous radiaux ménagés dans la denture 92 du porte-disques 90 intérieur pour circuler entre les disques 84 de friction et les flasques 86 de l'ensemble multidisques de E1 avant de traverser les trous radiaux ménagés dans la denture 77 du porte-disques 76 extérieur.

Pour le deuxième embrayage E2, le flux d'huile traverse radialement les trous radiaux ménagés dans la denture 142 du porte-disques 140 intérieur pour circuler entre les disques 124 de friction et les flasques 136 de l'ensemble multidisques de E2 avant de traverser les trous radiaux ménagés dans la denture 127 du porte-disques 126 extérieur.

Lorsque les moyens de liaison sont réalisés par rivetage, l'étanchéité de la chambre 58 d'équilibrage du premier embrayage E1 est assurée autour des trous 98 par contact entre une face annulaire, radialement plane, qui est formée à la faveur de l'embouti 96 et entoure le trou 98.

Une fois le rivetage effectué pour lier axialement les pièces ensemble, ladite face annulaire coopère avec une portion de la face radiale plane entourant le trou 97 du porte-disques 90 intérieur.

L'étanchéité de la chambre 118 d'équilibrage du deuxième embrayage E2 est assurée autour des trous 148 par contact entre une face annulaire, radialement plane, qui est formée à la faveur de l'embouti 146 et entoure le trou 148.

Une fois le rivetage effectué pour lier axialement les pièces ensemble, ladite face annulaire coopère avec une portion de la face radiale plane entourant le trou 147 du porte-disques 140 intérieur.

Après avoir circulé radialement à travers le premier embrayage E1 et le deuxième embrayage E2, l'huile se retrouve dans l'espace radialement compris entre les porte-disques 76, 126 et la coquille 12 d'entrée liée par les rivets 25 au voile 18 d'entraînement.

Une partie de l'huile ayant notamment circulée à travers le première embrayage E1 se retrouve dans l'espace qui, axialement à l'avant, est compris radialement entre le porte-disques 76 extérieur et une face interne de la partie 18A radialement externe d'orientation axiale qui est inclinée.

L'huile est alors évacuée radialement par les trous 30A et 30B suivant les flèches représentées sur la figure 2 et, suivant avantageusement la partie 18A radialement externe d'orientation axiale du voile 18 d'entraînement qui est inclinée, par les passages P radiaux d'évacuation d'huile formés au moyen des emboutis 27 axiaux dans le rebord 16.

Une partie de l'huile ayant notamment circulée à travers le deuxième embrayage E2 se retrouve dans l'espace qui, axialement à l'arrière, est compris radialement entre le porte-disques 126 extérieur et une face interne de la partie 12A radialement externe d'orientation axiale de la coquille 12 d'entrée qui est inclinée.

L'huile est alors évacuée radialement en suivant avantageusement la partie 12A radialement externe d'orientation axiale qui est inclinée, par les passages P radiaux d'évacuation d'huile formés au moyen des emboutis 27.

En variante non représentée, la partie 12A radialement externe d'orientation axiale de la coquille 12 d'entrée comporte des trous radiaux similaires aux trous 30 du voile 18 d'entraînement.

On a représenté sur les figures 5 à 7, un deuxième mode de réalisation de l'invention d'un système 10 de transmission comportant un mécanisme 20 à double embrayage humide.

On décrira ci-après ce deuxième mode de réalisation par comparaison avec le premier mode de réalisation, les mêmes chiffres de référence désignant des pièces identiques ou des pièces ayant des fonctions similaires.

La description du système 10 de transmission selon le premier mode de réalisation illustré par les figures 1 à 4 et tout particulièrement celle du mécanisme 20 à double embrayage humide s'applique par conséquent au deuxième mode de réalisation représenté aux figures 5 à 7.

Dans ce deuxième mode de réalisation, la coquille 12 d'entrée et le voile 18 d'entraînement sont liés en rotation sans jeu angulaire, ni jeu axial par des moyens 24 de liaison constitués par des rivets 25.

De préférence, lesdits moyens 24 de liaison sont réalisés par rivetage, en variantes non représentées par soudage ou par sertissage.

La coquille 12 d'entrée comporte au moins une partie de liaison d'orientation radiale qui est liée en rotation par lesdits rivets 25 avec une partie de liaison d'orientation radiale du voile 18 d'entraînement.

La coquille 12 d'entrée comporte une partie 16 de liaison d'orientation radiale qui, circonférentiellement discontinue, est constituée par des pattes radiales.

Le voile 18 d'entraînement comporte une partie 22 de liaison d'orientation radiale qui est constituée par un rebord circonférentiellement continu.

En variante non représentée, le voile 18 d'entraînement comporte une partie 22 de liaison d'orientation radiale qui est constituée par des pattes radiales, comme la coquille 12 d'entrée dans ce deuxième mode de réalisation.

En variante non représentée, la coquille 12 d'entrée comporte une partie 16 de liaison d'orientation radiale qui est constituée par un rebord circonférentiellement continu et le voile 18 d'entraînement comporte une partie 22 de liaison d'orientation radiale qui, circonférentiellement discontinue, est constituée par des pattes radiales.

Lorsque au moins l'une des parties 16, 22 de liaison d'orientation radiale est circonférentiellement discontinue et que lesdits moyens 24 de liaison sont réalisés alternativement au rivetage par un cordon de soudure circonférentiellement discontinu, alors une telle soudure est de préférence une soudure par apport de matière. Alternativement, la soudure peut être de type soudure par résistance par point.

Les pattes 16 radiales formant ladite au moins une partie de liaison de la coquille 12 d'entrée comporte chacune une face 17 radiale qui, par comparaison au premier mode de réalisation, est circonférentiellement discontinue.

Le rebord 22 formant ladite au moins une partie de liaison du voile 18 d'entraînement comporte une face 21 radiale qui, comme dans le premier mode de réalisation, est circonférentiellement continue.

Les faces 17 radiales des pattes 16 et la face 21 du rebord 22 sont accolées axialement l'une avec l'autre dans les portions où lesdites pattes 16 sont liées axialement au rebord 22 par les rivets 25 formant lesdits moyens 24 de liaison.

Avantageusement et comme dans le premier mode de réalisation, le système 10 comporte des moyens d'évacuation d'huile agencés dans au moins une partie radialement externe de la coquille 12 d'entrée et/ou dans au moins une partie radialement externe du voile 18 d'entraînement pour permettre une évacuation de l'huile, radialement vers l'extérieur.

De préférence, lesdits moyens d'évacuation d'huile sont répartis circonférentiellement de manière régulière et/ou sont appariés symétriquement par rapport à l'axe O.

Tel que représenté sur les figures 5 à 7, lesdits moyens d'évacuation d'huile comportent au moins des trous 30 radiaux réalisés dans une partie radialement externe d'orientation axiale du voile 18 d'entraînement.

Avantageusement, lesdits moyens d'évacuation d'huile comportent au moins un passage P radial d'évacuation d'huile ménagé circonférentiellement entre les parties de liaison de la coquille 12 d'entrée et du voile 18 d'entraînement liées en rotation par les rivets 25 formant lesdits moyens 24 de liaison.

Dans ce deuxième mode de réalisation, ledit au moins un passage P radial d'évacuation d'huile n'est pas obtenu au moyen d'un embouti axial.

Avantageusement, ledit au moins un passage P radial d'évacuation d'huile est formé par un jeu axial présent entre un bord 29 de la coquille 12 d'entrée et le voile 18 d'entraînement.

Ledit jeu axial, circonférentiellement discontinu, est situé entre tout ou partie des portions desdites parties 16, 22 de liaison de la coquille 12 d'entrée et du voile 18 d'entraînement liées en rotation par les rivets 25 de liaison, c'est-à-dire de préférence entre deux pattes 16 radiales consécutives.

Avantageusement, suivant ce deuxième mode de réalisation, lesdits moyens d'évacuation d'huile peuvent comporter des trous 30 radiaux réalisés dans la partie 12A radialement externe d'orientation axiale de la coquille 12 d'entrée.

## Revendications

1. Système (10) de transmission, notamment pour un véhicule automobile, comportant autour d'un axe (O) au moins une coquille (12) d'entrée qui est liée en rotation à un arbre menant et à un voile (18) d'entraînement pour lier en rotation ladite coquille (12) d'entrée à un mécanisme (20) à double embrayage humide qui, comportant au moins un premier embrayage (E1) et un deuxième embrayage (E2) respectivement de type multidisques, est commandé pour accoupler sélectivement ledit arbre menant à un premier arbre (A1) mené et à un deuxième arbre (A2) mené,
la coquille (12) d'entrée et le voile (18) d'entraînement étant liés en rotation sans jeu angulaire par des moyens (24) de liaison réalisés par rivetage, ou par soudage,
**caractérisé en ce que** le système (10) comporte des moyens d'évacuation d'huile agencés dans au moins une partie radialement externe de la coquille (12) d'entrée et/ou dans au moins une partie radialement externe du voile (18) d'entraînement pour permettre une évacuation de l'huile, radialement vers l'extérieur,
et **en ce que** lesdits moyens d'évacuation d'huile comportent au moins un passage (P) radial d'évacuation d'huile ménagé circonférentiellement entre les parties (16, 22) de liaison de la coquille (12) d'entrée et du voile (18) d'entraînement liées en rotation par lesdits moyens (24) de liaison.

2. Système selon la revendication 1, **caractérisé en ce que** lesdits moyens (24) de liaison, réalisés par soudage, sont réalisés par un cordon de soudure circonférentiellement continu.

3. Système selon la revendication 1, **caractérisé en ce que** lesdits moyens (24) de liaison, réalisés par soudage, sont réalisés par un cordon de soudure circonférentiellement discontinu, telle qu'une soudure par apport de matière.

4. Système selon la revendication 1, **caractérisé en ce que** lesdits moyens (24) de liaison, réalisés par soudage, sont réalisés par une soudure sans apport de matière, telle qu'une soudure par résistance par points.

5. Système selon l'une quelconque des revendications 1 à 4, **caractérisé en ce que** la coquille (12) d'entrée comporte au moins une partie (16) de liaison d'orientation radiale qui est liée en rotation par lesdits moyens (24) de liaison avec une partie (22) de liaison d'orientation radiale du voile (18) d'entraînement.

6. Système selon la revendication 5, **caractérisé en ce que** au moins l'une desdites parties (16, 22) de liaison d'orientation radiale est constituée par un rebord circonférentiellement continu.

7. Système selon l'une des revendications 5 ou 6, **caractérisé en ce que** au moins l'une desdites parties (16, 22) de liaison d'orientation radiale, circonférentiellement discontinue, est constituée par des pattes radiales.

8. Système selon l'une des revendications 5 à 7, **caractérisé en ce que** ladite au moins une partie (16) de liaison de la coquille (12) d'entrée comporte une face (17) radiale et ladite au moins une partie (22) de liaison du voile (18) d'entraînement comporte une face (21) radiale, lesdites faces radiales (17, 21) étant accolées axialement l'une avec l'autre dans au moins des portions où lesdites parties (16, 22) de liaison sont liées axialement par lesdits moyens (24) de liaison.

9. Système selon l'une quelconque des revendications précédentes, **caractérisé en ce que** lesdits moyens d'évacuation d'huile sont répartis circonférentiellement de manière régulière et/ou sont appariés symétriquement par rapport à l'axe (O).

10. Système selon l'une quelconque des revendications précédentes, **caractérisé en ce que** lesdits moyens d'évacuation d'huile comportent au moins des trous (30) radiaux réalisés dans une partie (18A) radialement externe d'orientation axiale du voile (18) d'entraînement et/ou dans une partie (12A) radialement externe d'orientation axiale de la coquille (12) d'entrée.

11. Système selon l'une quelconque des revendications précédentes, **caractérisé en ce que** ledit au moins un passage (P) radial d'évacuation d'huile est formé par un embouti (27) axial réalisé dans au moins une portion non liée de ladite au moins une partie (16) de liaison de la coquille (12) d'entrée et/ou dans au moins une portion non liée de ladite au moins une partie (22) de liaison du voile (18) d'entraînement.

12. Système selon l'une des revendications 1 à 10, **caractérisé en ce que** ledit au moins un passage (P) radial d'évacuation d'huile est formé par un jeu axial entre un bord (29) de la coquille (12) d'entrée et le voile (18) d'entraînement, ledit jeu axial circonférentiellement discontinu étant situé entre tout ou partie des portions desdites parties (16, 22) de liaison de la coquille (12) d'entrée et du voile (18) d'entraînement liées en rotation par lesdits moyens (24) de liaison.

## Patentansprüche

1. Antriebssystem (10), insbesondere für ein Kraftfahrzeug, das um eine Achse (O) mindestens eine Eingangsschale (12) aufweist, die in Drehung mit einer Antriebswelle und mit einer Antriebsscheibe verbunden ist, um die Eingangsschale (12) in Drehung mit einem Mechanismus (20) mit Doppelnasskupplung zu verbinden, der, indem er mindestens eine erste Kupplung (E1) und eine zweite Kupplung (E2) je von der Art Mehrscheibenkupplung aufweist, gesteuert wird, um die Antriebswelle selektiv mit einer ersten Abtriebswelle (A1) bzw. einer zweiten Abtriebswelle (A2) zu koppeln,
wobei die Eingangsschale (12) und die Antriebsscheibe (18) in Drehung ohne Winkelspiel durch Verbindungsmittel (24) verbunden sind, die durch Nieten oder Schweißen hergestellt werden, **dadurch gekennzeichnet, dass** das System (10) Ölabscheidungseinrichtungen aufweist, die in mindestens einem radial äußeren Teil der Eingangsschale (12) und/oder in mindestens einem radial äußeren Teil der Antriebsscheibe (18) angeordnet sind, um eine Abscheidung des Öls radial nach außen zu erlauben,
und dass die Ölabscheidungseinrichtungen mindestens einen radialen Ölabscheidungsdurchgang (P) aufweisen, der am Umfang zwischen den Verbindungsteilen (16, 22) der Eingangsschale (12) und der Antriebsscheibe ausgespart ist, die in Drehung durch die Verbindungsmittel (24) verbunden sind.

2. System nach Anspruch 1, **dadurch gekennzeichnet, dass** die durch Schweißen hergestellten Verbindungsmittel (24) durch eine kontinuierliche Schweißnaht am Umfang hergestellt werden.

3. System nach Anspruch 1, **dadurch gekennzeichnet, dass** die durch Schweißen hergestellten Verbindungsmittel (24) durch eine diskontinuierliche Schweißnaht am Umfang hergestellt werden, wie ein Schweißen durch Materialzufuhr.

4. System nach Anspruch 1, **dadurch gekennzeichnet, dass** die durch Schweißen hergestellten Verbindungsmittel (24) durch ein Schweißen ohne Materialzufuhr hergestellt werden, wie ein Widerstandspunktschweißen.

5. System nach einem der Ansprüche 1 bis 4, **dadurch gekennzeichnet, dass** die Eingangsschale (12) mindestens einen Verbindungsteil (16) radialer Ausrichtung aufweist, der in Drehung durch die Verbindungsmittel (24) mit einem Verbindungsteil (22) radialer Ausrichtung der Antriebsscheibe (18) verbunden ist.

6. System nach Anspruch 5, **dadurch gekennzeichnet, dass** mindestens einer der Verbindungsteile (16, 22) radialer Ausrichtung aus einer in Umfangsrichtung kontinuierlichen Randleiste besteht.

7. System nach einem der Ansprüche 5 oder 6, **dadurch gekennzeichnet, dass** mindestens einer der in Umfangsrichtung diskontinuierlichen Verbindungsteile (16, 22) radialer Ausrichtung aus radialen Laschen besteht.

8. System nach einem der Ansprüche 5 bis 7, **dadurch gekennzeichnet, dass** der mindestens eine Verbindungsteil (16) der Eingangsschale (12) eine radiale Seite (17) aufweist, und der mindestens eine Verbindungsteil (22) der Antriebsscheibe (18) eine radiale Seite (21) aufweist, wobei die radialen Seiten (17, 21) mindestens in Abschnitten axial aneinander befestigt sind, in denen die Verbindungsteile (16, 22) axial durch die Verbindungsmittel (24) verbunden sind.

9. System nach einem der vorhergehenden Ansprüche, **dadurch gekennzeichnet, dass** die Ölabscheidungseinrichtungen in Umfangsrichtung gleichmäßig verteilt und/oder bezüglich der Achse (O) symmetrisch gepaart sind.

10. System nach einem der vorhergehenden Ansprüche, **dadurch gekennzeichnet, dass** die Ölabscheidungseinrichtungen mindestens radiale Löcher (30) aufweisen, die in einem radial äußeren Teil (18A) axialer Ausrichtung der Antriebsscheibe (18) und/oder in einem radial äußeren Teil (12A) axialer Ausrichtung der Eingangsschale (12) hergestellt sind.

11. System nach einem der vorhergehenden Ansprüche, **dadurch gekennzeichnet, dass** der mindestens eine radiale Ölabscheidungsdurchgang (P) von einem axialen Stulpblech (27) geformt wird, das in mindestens einem nicht verbundenen Abschnitt des mindestens einen Verbindungsteils (16) der Eingangsschale (12) und/oder in mindestens einem nicht verbundenen Abschnitt des mindestens einen Verbindungsteils (22) der Antriebsscheibe (18) hergestellt ist.

12. System nach einem der Ansprüche 1 bis 10, **dadurch gekennzeichnet, dass** der mindestens eine radiale Ölabscheidungsdurchgang (P) von einem axialen Spiel zwischen einem Rand (29) der Eingangsschale (12) und der Antriebsscheibe (18) gebildet wird, wobei das in Umfangsrichtung diskontinuierliche axiale Spiel sich zwischen den ganzen oder einem Teil der Abschnitte der Verbindungsteile (16, 22) der Eingangsschale (12) und der Antriebsscheibe (18) befindet, die in Drehung durch die Verbindungsmittel (24) verbunden werden.

## Claims

1. A transmission system (10), especially for a motor vehicle, having around an axis (O) at least an input shell (12) that is rotationally connected to a driving shaft and to a drive web (18) in order to rotationally connect said input shell (12) to a double wet clutch mechanism (20) that, having at least a first clutch (E1) and a second clutch (E2) respectively of the multiple-disc type, is controlled to selectively couple said driving shaft to a first driven shaft (A1) and to a second driven shaft (A2),wherein the input shell (12) and the drive web (18) are rotationally connected by connecting means implemented by riveting, or by welding, with zero angular clearance,**characterized in that** the system (10) has oil drainage means arranged in at least one radially outer portion of the input shell (12) and/or in at least one radially outer portion of the drive web (18), to allow oil drainage radially outward,and wherein said oil drainage means have at least one radial oil drainage passage (P) configured circumferentially between the connecting portions (16, 22) of the input shell (12) and of the drive web (18) rotationally connected by said connecting means (24).

2. System according to Claim 1, **characterized in that** said connecting means (24), implemented by welding, are implemented by a circumferentially continuous weld bead.

3. System according to Claim 1, **characterized in that** said connecting means (24), implemented by welding, are implemented by a circumferentially discontinuous weld bead, such as an added-material weld.

4. System according to Claim 1, **characterized in that** said connecting means (24), implemented by welding, are implemented by a weld with no added material, such as a spot resistance weld.

5. System according to any one of Claims 1 to 4, **characterized in that** the input shell (12) has at least one radially oriented connecting portion (16) that is rotationally connected by said connecting means (24) to a radially oriented connecting portion (22) of the drive web (18).

6. System according to Claim 5, **characterized in that** at least one of said radially oriented connecting portions (16, 22) is constituted by a circumferentially continuous rim.

7. System according to one of the Claims 5 or 6, wherein at least one of said radially oriented circumferentially discontinuous connecting portions (16, 22) is constituted by radial tabs.

8. System according to any one of the Claims 5 to 7, **characterized in that** said at least one connecting portion (16) of the input shell (12) has a radial face (17) and said at least one connecting portion (22) of the drive web (18) has a radial face (21), said radial faces (17, 21) being attached axially to one another in at least regions in which said connecting portions (16, 22) are axially connected by said connecting means (24).

9. System according to any one of the preceding Claims, **characterized in that** said oil drainage means are distributed circumferentially in a regular manner and/or are paired symmetrically with respect to the axis (O).

10. System according to any one of the preceding Claims, **characterized in that** said oil drainage means have at least radial holes (30) implemented in an axially oriented radially outer portion (18A) of the drive web (18) and/or in an axially oriented radially outer portion (12A) of the input shell (12).

11. System according to any one of the preceding Claims, **characterized in that** said at least one radial oil drainage passage (P) is constituted by an axial indentation (27) implemented in at least one unconnected region of said at least one connecting portion (16) of the input shell (12) and/or in at least one unconnected region of said at least one connecting portion (22) of the drive web (18).

12. System according to any one of the Claims 1 to 10, **characterized in that** said at least one radial oil drainage passage (P) is constituted by an axial clearance between an edge (29) of the input shell (12) and the drive web (18), said circumferentially discontinuous axial clearance being located between all or some of the regions of said connecting portions (16, 22) of the input shell (12) and of the drive web (18) rotationally connected by said connecting means (24).
